# EUROPEAN PATENT SPECIFICATION

(11) **EP 2 941 154 B1**
(45) Date of publication and mention of the grant of the patent: **12.07.2017**
(21) Application number: 13818224.1
(22) Date of filing: 27.12.2013
(51) Int. Cl.: A47J 27/00

(54) **AN INDUCTION WATER HEATING DEVICE**
INDUKTIVE WARMWASSERBEREITUNGSVORRICHTUNG
DISPOSITIF DE CHAUFFAGE D'EAU PAR INDUCTION

(30) Priority: 31.12.2012 TR 201215792
(43) Date of publication of application: 11.11.2015
(73) Proprietor: Arçelik Anonim Sirketi, 34950 Istanbul (TR)
(72) Inventor: YAMAN, Onur, 34950 Istanbul (TR); YORUKOGLU, Ahmet, 34950 Istanbul (TR); HAZIR, Sefa, 34950 Istanbul (TR); SONMEZOZ, Fehmi, 34950 Istanbul (TR)
(86) International application number: PCT/EP2013/078065
(87) International publication number: WO 2014/102336

(56) References cited:
- EP-A2- 0 710 049
- CN-A- 101 865 526
- JP-A- 2006 034 595
- US-A1- 2012 248 123

## Description

The present invention relates to a water heating device operated on an induction heating cooktop and that is used for heating liquids.

Water heating devices suitable to be used on induction heating cooktops are produced from non-ferromagnetic material like glass, ceramic or transparent plastic and an inducible metal plate is fixed on the base of the heating container. Magnetic energy is transferred from the induction coil to the metal plate on the base of the heating container and the metal plate heats up and enables liquids to be heated. When the temperature of the liquid in the heating container is desired to be increased/decreased or when the liquid is desired to be kept at a certain temperature, the control unit of the induction coil is actuated and power suitable for the desired temperature degree is transferred to the heating container. The cost of electronic control systems that provide the adjustment of the temperature in induction heating cooktops is high. Furthermore, temperature sensors like NTC, PTC, and thermocouple are used for controlling the temperature of the heated liquids. Temperature sensor apparatuses cause cleaning and utilization problems relating to the position thereof on the heating container and the cost of temperature control system increases.

The Chinese Patent Application No. CN101865526 relates to an induction water heater. Water is heated by means of a stationary ferromagnetic metal plate inside the container that is heated with induction energy. Temperature control is provided by electronic systems.

In the Japanese Patent Application No. JP58112055, a container produced from glass or transparent plastic and a magnetic element produced from iron or iron-nickel compound that is heated magnetically, embedded into the wall of the container and that generates heat with the energy transferred by the induction coil are explained.

The aim of the present invention is the realization of a low cost water heating device operated on an induction heating cooktop and the temperature adjustment of which is made without using any temperature sensor.

The water heating device realized in order to realize the aim of the present invention is suitable to be used on the induction heating cooktop and enables the liquids to be heated, boiled or kept warm. The water heating device comprises a heating container produced from non-ferromagnetic material and a metal plate that generates heat by being inducted is placed into the heating container. The liquid placed in the heating container is enabled to be heated at the desired temperature by moving the metal plate upwards - downwards inside the heating container. In order to increase the heating temperature, the metal plate is moved closer to the base of the heating container, hence to the induction coil, and in order to decrease the heating temperature, the metal plate is moved away from the base of the heating container, hence from the induction coil.

In an embodiment of the present invention, the metal plate is moved upwards - downwards by means of a height adjustment mechanism mounted on the heating container.

In another embodiment of the present invention, a temperature setting indicator is situated on the heating container that shows the temperatures corresponding to different levels of the metal plate.

In another embodiment of the present invention, the metal plate is disposed on metal support members inside the heating container. The support members and the metal plate are moved upwards - downwards from outside the heating container by means of magnetic handles.

In an example not covered by the claims, metal plates with different weights are produced for different desired temperature settings. The metal plate with the suitable weight selected for the desired temperature setting is placed freely inside the heating container. The metal plate moves upwards/downwards inside the heating container with the effect of air bubbles formed during heating and the temperature of the liquid determined by the weight of the metal plate is enabled to be kept fixed.

In the water heating device of the present invention, temperature setting can be easily performed by the user without changing the power transferred from the induction coil. Sensor apparatuses are not used for temperature control, thereby cost decreases and ease of cleaning is provided.

The water heating device realized in order to attain the aim of the present invention is illustrated in the attached figures, where:
Figure 1 - is the schematic view of a water heating device operated on the induction heating cooktop.
Figure 2 - is the schematic view of a water heating device operated on the induction heating cooktop in an embodiment of the present invention.
Figure 3 - is the schematic view of a water heating device operated on the induction heating cooktop at high temperature setting in an example not covered by the present invention.
Figure 4 - is the schematic view of a water heating device operated on the induction heating cooktop at low temperature setting in another example not covered by the present invention.

The elements illustrated in the figures are numbered as follows:
1. Water heating device
2. Heating container
3. Base
4. Metal plate
5. Height adjustment mechanism
6. Temperature setting indicator
7. Support member
8. Magnetic handle
9. Induction coil
10. Induction heating cooktop

The water heating device (1) suitable to be used on an induction heating cooktop (10) comprising one or more than one induction coil (9) and enabling liquids like water, tea, coffee, milk or soup to be heated, boiled or kept warm, comprises a heating container (2) produced from non-ferromagnetic material like glass, plastic or ceramic, a base (3) forming the lower part of the heating container (2) and a disc-shaped metal plate (4) produced from ferromagnetic material, placed into the heating container (2) and that heats the liquids put into the heating container (2) by being heated with the magnetic energy transferred by the induction coil (9).

The water heating device (1) of the present invention comprises the metal plate (4) that is moved upwards - downwards inside the heating container (2) and that provides the adjustment of the temperature of the liquid placed into the heating container (2) by changing the distance (h) between the base (3) and the metal plate (4) without changing the power transferred from the induction coil (9).

In the water heating device (1), the metal plate (4) placed into the heating container (2) is enabled to move upwards - downwards and the temperature of the liquid in the heating container (2) is increased/decreased by increasing/decreasing the distance (h) between the metal plate (4) and the base (3), and hence the distance from the induction coil (9). The temperature adjustment is performed by only changing the height of the metal plate (4) and the energy transferred from the induction coil (9) is kept constant. When the temperature of the liquid is desired to be increased, the metal plate (4) is moved closer to the base (3), hence the induction coil (9), and the distance (h) between the metal plate (4) and the base (3) is decreased. The metal plate (4) comes to the closest position to the induction coil (9) when seated on the base (3) of the heating container (2) and the amount of magnetic energy collected from the induction coil (9) reaches the maximum level, enabling the liquid to be heated at the highest temperature setting. When the temperature of the liquid is desired to be decreased, the metal plate (4) is moved away from the base (3), hence from the induction coil (9), and the distance (h) between the metal plate (4) and the base (3) is increased. As the metal plate (4) moves away from the base (3), the magnetic energy collected from the induction coil (9) decreases and thereby the metal plate (4) is heated less and the liquid is enabled to be heated at the desired low temperatures or kept warm.

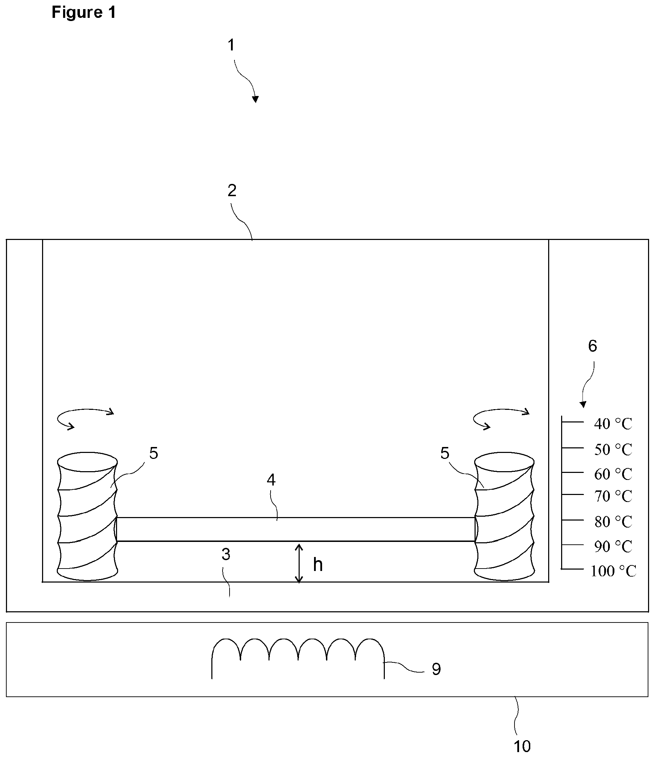

In an embodiment of the present invention, the water heating device (1) comprises a height adjustment mechanism (5) that is mounted to the heating container (2) and that enables the metal plate (4) to be kept fixed at the level it is brought to by being moved upwards - downwards in the heating container (2) (Figure 1).

In this embodiment, the level of the metal plate (4) is adjusted by the user by means of the height adjustment mechanism (5). The metal plate (4) is brought to the height (h) corresponding to the temperature setting inside the heating container (2) by means of the height adjustment mechanism (5) and the liquid is enabled to be heated at the desired temperature and the temperature to be kept constant.

In another embodiment of the present invention, the water heating device (1) comprises a temperature setting indicator (6) that is marked on the heating container (2) and that shows the temperature setting degrees of the liquid placed into the heating container (2) depending on the level of the metal plate (4) (Figure 1). The temperature setting indicator (6) shows the temperatures, the values of which decrease from the lower side of the heating container (2) towards the upper side.

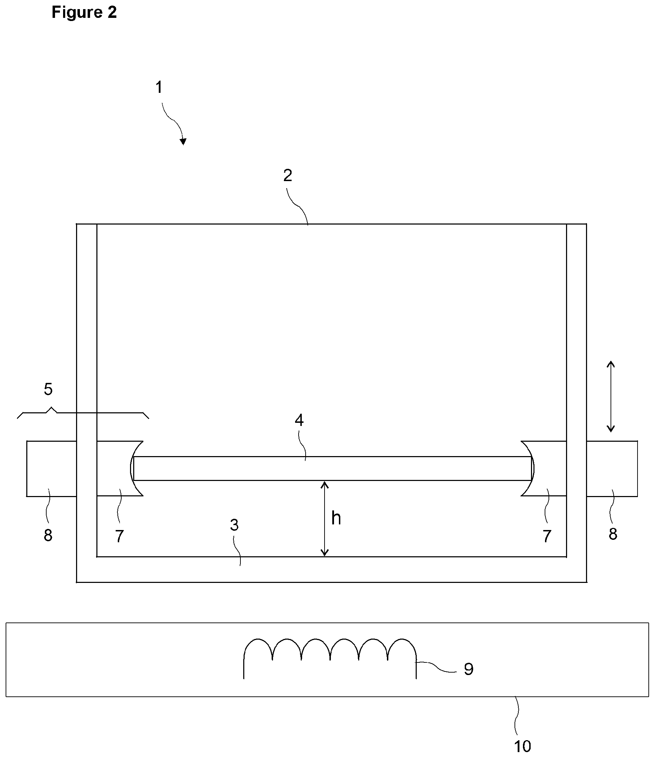

In another embodiment of the present invention, the height adjustment mechanism (5) comprises at least one support member (7) that contacts the inner surface of the heating container (2), that is produced from ferromagnetic material and that holds the metal plate (4) inside the heating container (2) parallel to the base (3) and at least one magnetic handle (8) that is moved upwards/downwards by the user, that moves the support member (7) upwards - downwards with the magnetic force applied thereby from the outer surface of the heating container (2) and that enable the level of the metal plate (4) to be changed (Figure 2).

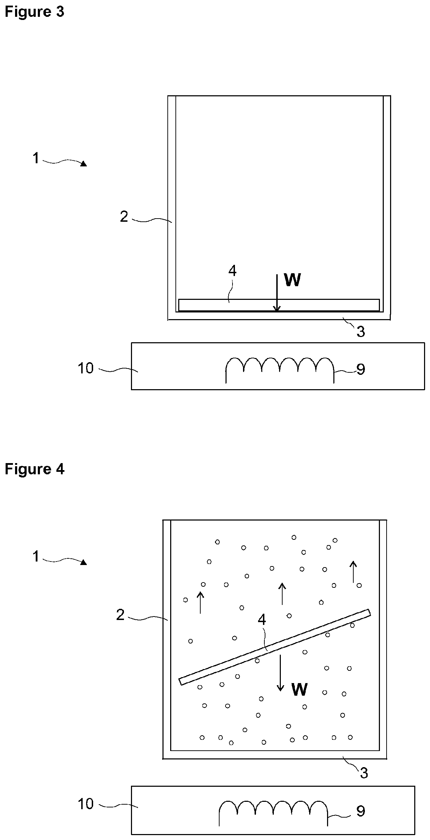

In an example not covered by the present invention, the water heating device (1) comprises the metal plate (4) that is produced with different weights (W) depending on the desired temperature setting, that is placed freely inside the heating container (2) and that moves upwards with the pushing force of the air bubbles formed when the temperature increases inside the heating container (2) (Figure 3, Figure 4).

In this example, the heating process is performed depending on the weight (W) of the metal plate (4) inside the heating container (2). Metal plates (4) with different weights (W) are produced for the desired different temperatures and the user places the metal plate (4) corresponding to the desired temperature in the heating container (2). The metal plate (4) is not embedded or fixed to the base (3) of the heating container (2) and can move freely inside the heating container (2). The metal plate (4) moves upwards with the effect of the air bubbles that are formed between the base (3) and the metal plate (4) and that move upwards by the effect of heat. The metal plate (4) rises inside the heating container (2) moving out of the magnetic field generated by the induction coil (9) and stops heating up. The metal plate (4) moves towards the base (3) again when the effect of the air bubbles decrease and starts heating up again by entering into the magnetic field of the induction coil (9). The said oscillation cycle of the metal plate (4) inside the heating container (2) continues until the end of the heating process. The parameter that determines the temperature of the liquid inside the container (2) is the weight (W) of the metal plate (4). As the weight (W) of the metal plate (4) increases, the heating rate increases since the metal (4) raises less in the heating container (2) and as the weight (W) of the metal plate (4) decreases, the heating rate decreases since the metal (4) raises more. The metal plate (4) is produced with different weights (W) so as to provide different temperatures.

In the water heating device (1) of the present invention, temperature adjustment is made by moving the metal plate (4) upwards - downwards inside the heating container (2), the power transferred from the induction coil (9) to the heating container (2) remains constant and the induction coil (9) is controlled by a simple and low cost electronic apparatus that does not require sensors.

## Claims

1. A water heating device (1) suitable to be used on an induction heating cooktop (10) that comprises one or more than one induction coil (9), comprising a heating container (2) produced from non-ferromagnetic material, a base (3) and a metal plate (4) that is placed into the heating container (2),
- the metal plate (4) being produced from ferromagnetic material and being capable of heating the liquids placed into the heating container (2) by being heated with the magnetic energy transferred by the induction coil (9), **characterized in that** the metal plate (4) is movable upwards-inwards inside the heating container (2),
- thus further being capable of providing the adjustment of the temperature of the liquid placed into the heating container (2) by changing the distance (h) between the base (3) and the metal plate (4) without changing the power transferred from the induction coil (9).

2. A water heating device (1) as in Claim 1, **characterized in that** a height adjustment mechanism (5) is mounted to the heating container (2) and enables the metal plate (4) to be kept fixed at the level it is brought to by being moved vertically upwards - downwards in the heating container (2).

3. A water heating device (1) as in Claim 1 or 2, **characterized in that** a temperature setting indicator (6) is marked on the heating container (2) and shows the temperature setting degrees of the liquid placed into the heating container (2) depending on the level of the metal plate (4).

4. A water heating device (1) as in Claim 2 or 3, **characterized in that** the height adjustment mechanism (5) comprising at least one support member (7) that contacts the inner surface of the heating container (2), that is produced from ferromagnetic material and that holds the metal plate (4) inside the heating container (2) parallel to the base (3) and furthermore comprising at least one magnetic handle (8) that moves the support member (7) upwards downwards from the outer surface of the heating container (2).

## Patentansprüche

1. Warmwasserbereiter (1), der aus einem nicht ferromagnetischen Material hergestellt ist und der eigeignet ist, auf einem Ofen (10) mit Induktionsheizvorrichtung, der eine oder mehrere Induktionsspule (9) enthält, zu benutzen, umfassend ein Heizgehäuse (2) einen Boden (3) und eine metallische Platte (4), die in das Heizgehäuse (2) eingesetzt ist,
wobei die metallische Platte (4) aus einem nicht ferromagnetischen Material hergestellt ist und die in das Heizgehäuse (2) befüllte Flüssigkeit erwärmt, in dem sie durch die magnetische Energie, die mittels der Induktionsspule (9) übertragen ist, beheizt wird, **dadurch gekennzeichnet dass**,
die metallische Platte (4) in dem Heizgehäuse (2) nach oben und nach innen beweglich ist, das Einstellen der Temperatur der in das Heizgehäuse (2) befüllte Flüssigkeit durch Verändern des Abstands (h) zwischen dem Boden (3) der metallischen Platte (4) sichergestellt wird, ohne die Veränderung der Leistung, die zusätzlich aus der Induktionsspule (9) übertragen wird.

2. Warmwasserbereiter (1) nach Anspruch 1 **gekennzeichnet durch** ein Höheneinstellmechanismus (5), das an das Heizgehäuse (2) befestigt wird und sicherstellt, die metallische Platte (4) auf der Niveau, auf die sie durch die Bewegung im Heizgehäuse (2) senkrecht nach oben und nach unten gebracht ist, zu halten.

3. Warmwasserbereiter (1) nach Anspruch 1 oder 2 **gekennzeichnet durch** Markieren der Anzeige (6) für das Einstellen der Temperatur auf der Heizgehäuse (2) und Anzeigen der Einstelltemperaturen der Flüssigkeit, die in das Heizgehäuse (2) in Abhängigkeit mit der Niveau der metallischen Platte (4) befüllt ist

4. Warmwasserbereiter (1) nach Anspruch 2 oder 3 **gekennzeichnet durch** Umfassen mindestens einen Träger (7), der mit der Innenwand des Heizgehäuses (2) in Anlage kommt, aus ferromagnetischen Material hergestellt ist und die metallische Platte (4) in dem Boden (3) parallel liegenden Heizgehäuse (2), haltet und zusätzlich ein Höheneinstellmechanismus (5), das einen Magnethalter (8), der den Träger (7) aus der Außenfläche des Heizgehäuses (2) nach oben und nach unten bewegt.

## Revendications

1. Dispositif de chauffage d'eau (1) apte à être utilisé sur une table de cuisson à chauffage par induction (10) qui comprend une ou plus d'une bobine d'induction (9), comprenant un récipient de chauffage (2) produit à partir de matériau non ferromagnétique, une base (3) et une plaque métallique (4) qui est placée dans le récipient chauffant (2),
- la plaque métallique (4) étant produite à partir de matériau ferromagnétique et capable de chauffer les liquides placés dans le récipient de chauffage (2) en étant chauffé avec l'énergie magnétique transférée par la bobine d'induction (9), **caractérisé en ce que** la plaque métallique (4) est mobile vers le haut- vers l'intérieur du récipient de chauffage (2),
- ce qui est en outre capable d'assurer le réglage de la température du liquide placé dans le récipient de chauffage (2) en changeant la distance (h) entre la base (3) et la plaque métallique (4) sans changer la puissance transférée de la bobine d'induction (9).

2. Un dispositif de chauffage d'eau (1) selon la revendication 1, **caractérisé en ce qu'**un mécanisme du réglage en hauteur (5) est monté sur le récipient de chauffage (2) et permet de maintenir la plaque métallique (4) au niveau auquel elle est amenée en se déplaçant verticalement vers le haut - vers le bas dans le récipient de chauffage (2).

3. Un dispositif de chauffage d'eau (1) selon la revendication 1 ou 2, **caractérisé en ce qu'**un indicateur de réglage de température (6) est marqué sur le récipient de chauffage (2) et montre les degrés de température du liquide placé dans le récipient de chauffage (2) selon le niveau de la plaque métallique (4).

4. Un dispositif de chauffage d'eau (1) selon la revendication 2 ou 3, **caractérisé en ce que** le mécanisme de réglage en hauteur (5) comprenant au moins un élément de support (7) qui entre en contact avec la surface intérieure du récipient de chauffage (2), qui est produit à partir de matériau ferromagnétique et qui maintient la plaque métallique (4) à l'intérieur du récipient de chauffage (2) parallèlement à la base (3) et comprenant en outre au moins une poignée magnétique (8) qui déplace l'élément de support (7) vers le haut vers le bas à partir de la surface extérieure du récipient de chauffage (2).
